# EUROPEAN PATENT APPLICATION

(11) **EP 1 967 935 A1**
(43) Date of publication of application: **10.09.2008**
(21) Application number: 07103467.2
(22) Date of filing: 05.03.2007
(51) Int. Cl.: G05D 23/13, F16K 11/00

(54) **Thermic multiport valve**

(71) Applicant: Esbe AB, 330 21 Reftele (SE)
(72) Inventor: Johansson, Christer, 33442, Värnamo (SE); Josefsson, Roland, 330 21, Reftele (SE)
(74) Representative: Andersson, Per-Olof

(57) **Abstract**

A thermic multiport valve for a boiler comprises a valve body (1) with at least three ports (2, 3, 4) and a valve chamber (1'). Said chamber (1') has a primary seat (5), arranged opposite a first mounting opening (2) along a centre axis (A) and cooperating with a valve piston (7), which is interposed between a compression spring (8) and a thermostatic cartridge (10) with a temperature responsive stem (10b) able to move the valve piston (7) against the action of the spring (8) along said axis (A). Opposite the first mounting opening (2) is arranged a second mounting opening (11), in which the thermostatic cartridge (10) is insertable at assembly and exchange while the spring (8) and the valve piston (7) are insertable through the first mounting opening (2) in order to abut the primary seat (5).

## Description

### Technical Field of the Invention

Present invention concerns a thermic multiport valve, intended for a boiler, comprising a valve body with at least three ports and a valve chamber, wherein the valve chamber has a primary seat, arranged opposite a first mounting opening along a centre axis and cooperating with a valve piston, which is interposed between a compression spring and a thermostatic cartridge with a temperature responsive stem able to move the valve piston against the action of the spring along said axis.

### Background Art

A wood, pellet or coal boiler for central heating has usually an accumulator tank for storing energy. It is important to keep the boiler temperature within the specified temperature range given by the boiler manufacturer to reduce the risk of thermal shock and corrosion. The stratification of the water in the accumulator tank is important as hot water should leave the tank at the top, heat up the radiators and then return cooled at the bottom. In order to uphold this stratification, tank water is heated from the top and downwards, i.e. cold water from the bottom is tapped and mixed with hot water from the boiler.

For high efficiency the boiler further needs to quickly reach its working temperature. For this reason during start up the circulation pump first circulates the water to a first port in the valve and back to the boiler. As the temperature of the water rises the valve opens a second port to introduce cold water from the bottom of the accumulator tank. The valve hence must have means to quickly respond to water temperature changes and to open and close the ports accordingly.

This preheating and mixing is done by means of a thermic multiport valve of the kind mentioned by way of introduction.

Of the components in a thermic multiport valve the thermostatic cartridge has the shortest working life. It would therefore be desirable to exchange this cartridge without troublesome demounting.

### Summary of the Invention

The object of the invention is to provide a thermic multiport valve with a thermostatic cartridge which is easy and failsafe to demount and assemble.

This is achieved by means of a valve of the by way of introduction mentioned valve, in which opposite the first mounting opening is arranged a second mounting opening, in which the thermostatic cartridge is insertable at assembly and exchange while the spring and the valve piston are insertable through the first mounting opening in order to abut the primary seat.

The first mounting opening in the thermic multiport valve according the invention coincides preferably with a first port and is arranged essentially perpendicular in relation to a second and a third port, and the second mounting opening is covered by a cap. Though it is also possible to use the second or the third port as the first and the second mounting openings.

One end of the compression spring is preferably secured in an annular groove in the inner wall of valve body and the other end is abutting against the valve piston. With this construction securing of the spring is simple and swift.

The primary valve seat is preferably formed integrally with the valve body as this eliminates the step of adding a seat.

For making it possible to alternately close of one of the two valve ports the valve chamber has a secondary seat, aligned with the primary seat.

The valve piston comprises advantageously a primary disc and a secondary disc, which are connected by spacer. The spacer comprises preferably a plurality rods acting as turbulence elements. The turbulence element allows for flushing the thermostatic cartridge with the water and improves the mixing of the flow from the different inlet ports so that the thermostatic cartridge senses the accurate mixed water temperature.

Integral casting of the two discs with the spacer facilitates manufacturing and assembly. A more failsafe assembly is achieved with fewer parts to assemble.

Preferably, the primary disc is arranged to close the opening defined by the first seat and is provided with guide pins on the surface facing the first seat and the secondary disc is arranged to close the opening defined by the secondary seat and is provided with guide pins on the surface facing the secondary seat. Together the first and the second disc guide pins hinder the valve piston from sliding out of position as they are restricted in their lateral motion, i.e. perpendicular to the axial direction A, by the seats.

### Brief Description of the Drawings

The invention will now be described in more detail by means of a preferred but non-limiting embodiment and with reference to the accompanying drawings.

Fig. 1 is a section showing a thermic multiport valve with a valve piston abutting a primary seat.

Fig. 2 is a section showing the valve in Fig.1 with the valve piston lifted from the primary seat by a thermostatic cartridge.

Fig. 3 is perspective view of the valve piston in fig. 1 and 2.

Fig. 4 is a section showing a valve unit comprising a thermic multiport valve and a pump.

Fig. 5 is perspective view showing another embodiment of a valve piston for a thermic multiport valve.

### Detailed Description of Preferred Embodiments of the Invention

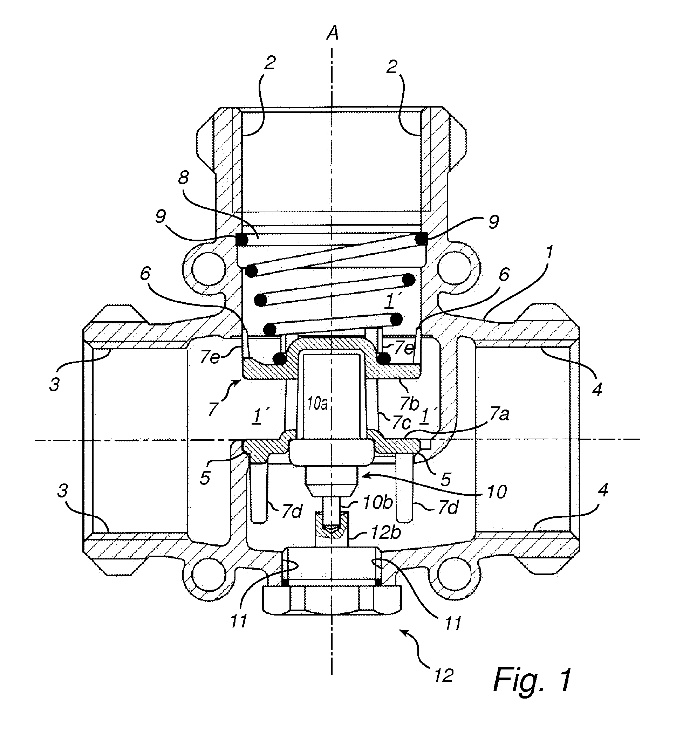

A thermic multiport valve, shown in fig. 1-2 and 4, is a three-way valve and comprises a valve body 1 having two inlet ports 2, 4, one outlet port 3 and a valve chamber 1'.

The valve body 1 is formed in one piece, preferably by casting of iron, bronze or plastic. Two valve seats, a primary seat 5 and a secondary seat 6, arranged aligned, are integrally formed with the valve body 1.

The valve has three moving parts, namely a valve piston 7, a compression spring 8 and a thermostatic cartridge 10.

The compression spring 8 is a conical spring which forces the water flow a longer distance with fewer spring coils compared to a cylindrical spring and is chosen to avoid acoustic problems due to the water flowing.

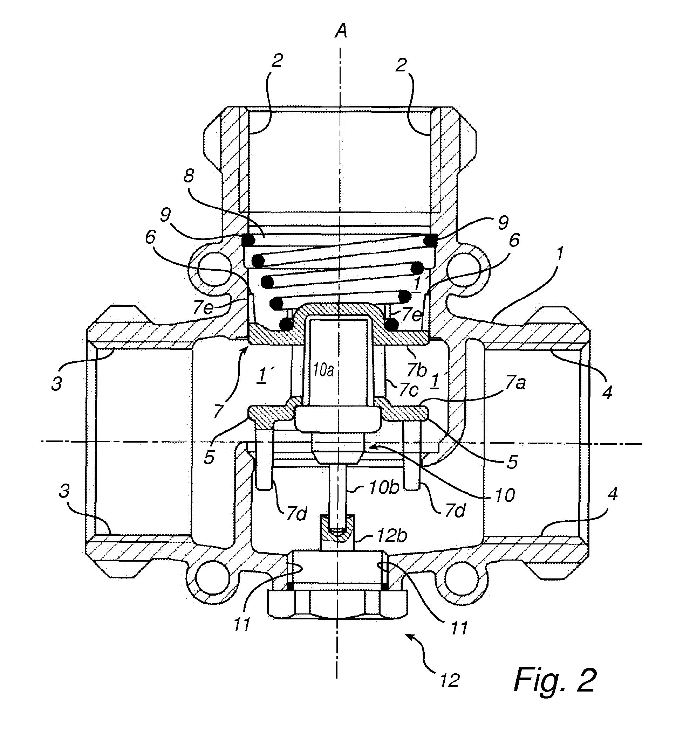

The thermostatic cartridge 10 comprises a covered wax body 10a with a stem 10b, which is pushed out of the body as the temperature rises as is shown in Fig 2. When the temperature falls the stem 10 b is returned to the position shown in Fig.1 by the spring 8.

The valve piston 7 is integrally formed with two essentially parallel discs 7a, 7b connected by a spacer 7c and preferably made of plastic. The primary disc 7a is arranged to close the opening defined by the primary seat 5 as is seen in Fig. 1 when the temperature is below the nominal temperature of the thermostatic cartridge and hence to stop the flow from the second inlet port 4. The primary disc 7a is further provided with guide pins 7d on the surface facing the primary seat 5.

The secondary disc 7b is arranged to close the opening defined by the secondary seat 6 as is seen in Fig. 2 when the temperature reaches the upper end of the working range for the thermostatic cartridge 10. The secondary disc 7b too is provided with guide pins 7e. These guide pins 7e are arranged on the surface facing the secondary seat 6.

The guide pins 7d, 7e allow the valve piston 7 only to move in an axial direction A in the valve chamber 1'. The secondary disc guide pins 7e are restricted in their lateral motion, i.e. perpendicular to the axial direction A, by the secondary seat 6 and the valve chamber inner wall between this seat and the spring groove 9. The primary disc guide pins are restricted in their lateral motion by the primary seat 5. Hence together the first and the second disc guide pins hinder the valve piston from sliding out of position.

The thermostatic cartridge 10 is arranged inside the valve piston 7 between the primary and the secondary disc 7a and 7b. The spacer, connecting the two discs, comprises a plurality of rods 7c acting as turbulence elements. These elements 7c make the water swirl around the thermostatic cartridge 10 so that the wax body 10a responds to the correct temperature.

In this valve the first inlet port 2 is the first mounting opening. During assembly first of all the valve piston 7 is inserted to bear against the primary seat 5. The compression spring 8 is thereafter inserted so as one end is abutting the secondary disc 7b and the other end is snap fitted in an annular groove 9 in the inner wall in the first inlet port 2. Instead of snap fitting the spring it is of course also possible to snap fit a locking ring in the annular groove, thus holding the spring. The valve piston 7 is hence clamped between the primary seat 5 and the spring 8 without need of additional fastening means.

The valve body 1 has a second mounting opening 11, arranged in axial alignment, opposite the first mounting opening 2. The thermostatic cartridge 10 is during assembly and exchange inserted through the second mounting opening 11. This makes it possible to completely assemble all parts of the valve except the thermostatic cartridge in their correct position of use. The valve piston 7, 27 and the spring 8 are secured behind the primary seat 5 in relation to the thermostatic cartridge 10 and are not affected when manipulating the thermostatic cartridge.

Exchange of the thermostatic cartridge 10 is extremely simple. One merely has to remove a cap 12 covering the second mounting opening 11 and replace the thermostatic cartridge with a new one without any risk of other parts falling out. On its surface facing the thermostatic cartridge 10 the cap 12 has a protrusion 12b with a centre bore. With the thermostatic cartridge on place the cap 12 closes the opening, wherein the thermostatic cartridge stem 10 is secured in the centre bore.

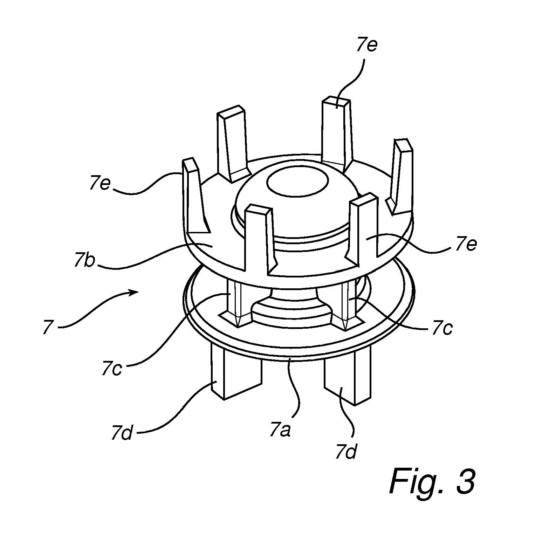

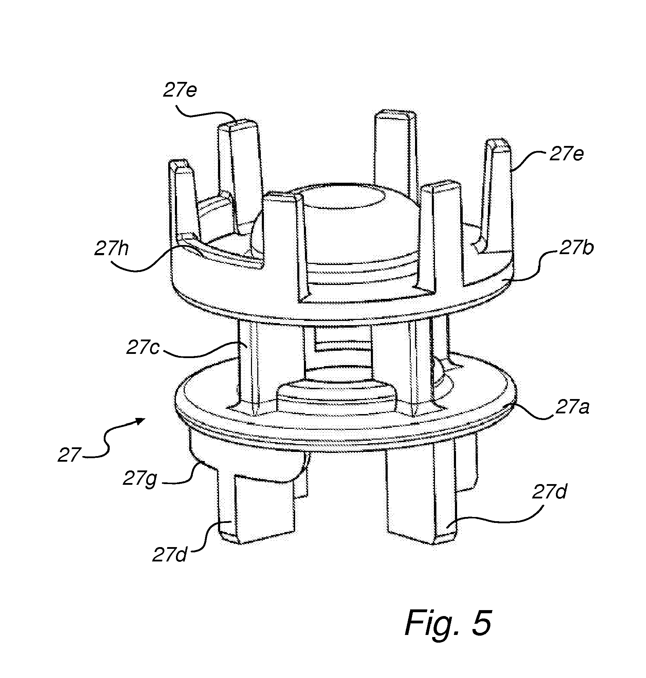

The valve piston 27 shown in fig 5 is assembled together with a spring and a thermostatic cartridge in the same way as the valve piston 7 in fig 3.

It is a substantial logistic advantage that it is possible to manufacture the valve according to the invention without inserting the thermostatic cartridge until delivery.

With a different design of the valve seats it is possible to use the second or the third port as the first and second mounting opening instead.

It is also possible to provide the valve with means for pushing the valve piston away from one of the seats to forcibly open an inlet port. This option is essential for self-circulation or rapid cooling in case of power failure and does provide a more failsafe construction

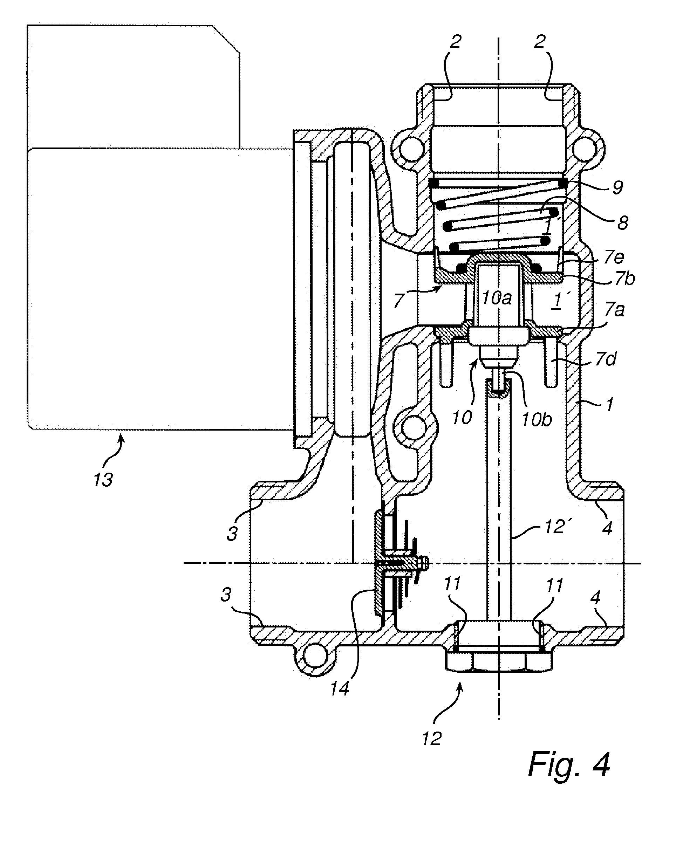

The thermic three-way valve shown in Fig. 4 is part of a valve unit comprising a valve and pump 13. This valve has a valve body 21 differing from the valve shown in Fig. 1 and 2, still the same thermostatic cartridge, valve piston and compression spring could be used. The projection 12b arranged on inner side of the cap 12 and holding the stem of the thermostatic cartridge 10 is longer than in the valve shown in Fig. 1 and 2 so that despite the more complex form of the valve body 21, the thermostatic cartridge is as easy to replace as in the valve shown in Fig. 1 and 2. The valve unit is further provided with a non-return valve 14 which allows self-circulation in case of power failure.

A compression spring, a valve piston and a thermostatic cartridge could be used in a valve lacking a second mounting opening, for example a shunt valve, shuttle valve or mixing valve. At assembly the thermostatic cartridge would be inserted first, followed by the valve piston and the spring.

A thermic multiport valve of this kind comprises a valve body with at least three ports and a valve chamber. The valve chamber has a primary seat. A valve piston is axially aligned along a centre axis with the primary seat and is interposed between a compression spring and a thermostatic cartridge with a temperature responsive stem able to move the valve piston against the action of the spring along said axis. One end of the compression spring is secured, preferably snap fitted in an annular groove in the inner wall of valve body and the other end is abutting against the valve piston. The primary valve seat is formed integrally with the valve body. The valve chamber has a secondary seat, aligned with the primary seat, for throttling a flow from the first port.

The valve pistons 7, 27 shown in Fig. 3 and Fig. 5 could be used in multiport valves according the invention or in valves or the above described type without a second mounting opening. The valve pistons 7, 27 each comprises a primary disc 7a, 27a and a secondary disc 7b, 27b, which are connected by and preferably cast integrally with the spacer. The spacer is formed of a plurality of rods 7c, 27c acting as turbulence elements as described above. The primary disc 7a is arranged to close the opening defined by the first seat and is provided with guide pins 7d, 27d on the surface facing the first seat and the secondary disc 7b, 27b is arranged to close the opening defined by the secondary seat and is provided with guide pins 7e, 27e on the surface facing the secondary seat.

The primary and the secondary disc 27a and 27b on the valve piston 27 in fig 5 have, on the surface provided with the guide pins 27d, 27e, a bead 27g and 27h, respectively. The bead 27g, 27h is arranged to give the disc 27a, 27b an asymmetrical form for more efficiently flushing the cartridge with water at moderate port opening. Each bead 27g, 27h is arranged along a part of the disc periphery between adjacent guide pins 27d, 27e.

With this construction of valve with a valve piston provided with guide pins it is possible to provide a valve which has a leakage of less than 1 % of the possible flow at each seat and which is simple to assemble, with parts that are simple to manufacture.

## Claims

1. Thermic multiport valve for a boiler, comprising
a valve body (1) with at least three ports (2, 3, 4) and a valve chamber (1'),
wherein the valve chamber (1') has a primary seat (5), arranged opposite a first mounting opening (2) along a centre axis (A) and cooperating with a valve piston (7), which is interposed between a compression spring (8) and a thermostatic cartridge (10) with a temperature responsive stem (10b) able to move the valve piston (7) against the action of the spring (8) along said axis (A),
**characterized in that** opposite the first mounting opening (2) is arranged a second mounting opening (11), in which the thermostatic cartridge (10) is insertable at assembly and exchange while the spring (8) and the valve piston (7) are insertable through the first mounting opening (2) in order to abut the primary seat (5) .

2. Thermic multiport valve according claim 1,
wherein the first mounting opening (2) forms a first port and is arranged essentially perpendicular in relation to a second and a third port (3,4), and wherein the second mounting opening (11) is covered by a cap (12).

3. Thermic multiport valve according to claim 1 or 2, wherein one end of the compression spring is secured in an annular groove (9) in the inner wall of valve body and the other end is abutting against the valve piston (7) .

4. Thermic multiport valve according to any one of the preceding claims, wherein the primary valve seat (5) is formed integrally with the valve body (1).

5. Thermic multiport valve according to any one of the preceding claims, wherein the valve chamber (1') has a secondary seat (6), aligned the primary seat (5), for throttling a flow from the first port (2).

6. Thermic multiport valve according to any one of the preceding claims, wherein the valve piston (7) comprises a primary disc (7a) and a secondary disc (7b), which are connected by a spacer.

7. Thermic multiport valve according to claim 6, wherein the primary disc (7a) and the secondary disc (7b) are cast integral with the spacer.

8. Thermic multiport valve according to claim 6 or 7, wherein the spacer comprises a plurality rods acting as turbulence elements (7c).

9. Thermic multiport valve according to claim 6 or 7, wherein the primary disc (7a) is arranged to close the opening defined by the first seat (5) and is provided with guide pins (7d) on the surface facing the first seat (5) .

10. Thermic multiport valve according to claim 6 or 7, wherein the secondary disc (7b) is arranged to close the opening defined by the secondary seat (6) and is provided with guide pins (7e) on the surface facing the secondary seat (6).
